# EUROPEAN PATENT APPLICATION

(11) **EP 4 707 259 A1**
(43) Date of publication of application: **11.03.2026**
(21) Application number: 24797217.7
(22) Date of filing: 26.04.2024
(51) Int. Cl.: C04B 35/117

(54) **CERAMIC SINTERED BODY**

(30) Priority: 28.04.2023 JP 2023074870
(71) Applicant: Kyocera Corporation, Kyoto-shi, Kyoto 612-8501 (JP)
(72) Inventor: MATSUSHITA, Kouji, Kyoto-shi, Kyoto 612-8501 (JP); SUE, Toshiyuki, Kyoto-shi, Kyoto 612-8501 (JP); OHNISHI, Nobuyuki, Kyoto-shi, Kyoto 612-8501 (JP); HARADA, Masahiro, Kyoto-shi, Kyoto 612-8501 (JP)
(74) Representative: Viering, Jentschura & Partner mbB Patent- und Rechtsanwälte
(86) International application number: PCT/JP2024/016579
(87) International publication number: WO 2024/225475

(57) **Abstract**

A ceramic sintered body includes Al, Ti, Fe, and at least one selected from the group consisting of Si, Ca, and Mg, in which the ceramic sintered body contains: Al in an amount of 67 mass% or more in terms of Al₂O₃; Ti and Fe in a total amount of 10 mass% or more and 30 mass% or less in terms of TiO₂ and Fe₂O₃, respectively, where TiO₂/(TiO₂ + Fe₂O₃) of the ceramic sintered body is 5% or more and 20% or less; and the at least one selected from the group consisting of Si, Ca, and Mg in a total amount of 0.5 mass% or more and 3.0 mass% or less in terms of SiO₂, CaO, and MgO, respectively. A volume resistivity of the ceramic sintered body is 1.0 × 10⁴ Ω cm or more and 1.0 × 10¹¹ Q cm or less.

## Description

### TECHNICAL FIELD

The present disclosure relates to a ceramic sintered body.

### BACKGROUND OF INVENTION

Patent Document 1 discloses a known ceramic sintered body that is used for a mounting substrate, a member for an exposure treatment device, a light shielding material, a heat absorbing material, and the like. Such a ceramic sintered body has, for example, a black color and includes a composite oxide containing a plurality of metal elements such as Ti and Fe.

### CITATION LIST

### PATENT LITERATURE

Patent Document 1: JP H01-042359 A

### SUMMARY

In an aspect of an embodiment, a ceramic sintered body includes Al, Ti, Fe, and at least one selected from the group consisting of Si, Ca, and Mg, wherein the ceramic sintered body contains: the Al in an amount of 67 mass% or more in terms of Al₂O₃; the Ti and the Fe in a total amount of 10 mass% or more and 30 mass% or less in terms of TiO₂ and Fe₂O₃, respectively, where TiO₂/(TiO₂ + Fe₂O₃) of the ceramic sintered body is 5% or more and 20% or less; and the at least one selected from the group consisting of the Si, the Ca, and the Mg in a total amount of 0.5 mass% or more and 3.0 mass% or less in terms of SiO₂, CaO, and MgO, respectively. A volume resistivity of the ceramic sintered body is 1.0 × 10⁴ Q cm or more and 1.0 × 10¹¹ Q cm or less.

### DESCRIPTION OF EMBODIMENTS

An embodiment of a ceramic sintered body disclosed in the present application will be described in detail below. Note that this invention is not limited to the following embodiment.

Patent Document 1 discloses a known ceramic sintered body that is used for a mounting substrate, a member for an exposure treatment device, a light shielding material, a heat absorbing material, and the like. Such a ceramic sintered body has, for example, a black color and includes a composite oxide containing a plurality of metal elements such as Ti and Fe.

However, when it is attempted to impart semiconductivity to the above-described ceramic sintered body, a problem of reduction in mechanical strength due to increased contents of Ti and Fe is raised.

Thus, it is expected to solve the above problem and to realize a black ceramic sintered body having semiconductivity and excellent mechanical strength.

The ceramic sintered body of the present disclosure contains Al, Ti, and Fe. Further, the ceramic sintered body of the present disclosure contains at least one selected from the group consisting of Si, Ca, and Mg. The ceramic sintered body of the present disclosure contains a plurality of metal oxides.

The ceramic sintered body of the present disclosure exhibits a black color. Specifically, the ceramic sintered body of the present disclosure has a* and b* of -2.0 or more and 2.0 or less. Here, a* and b* are values based on the CIE 1976 (L*a*b*) color space. a* and b* can also be adjusted depending on firing temperature and firing time in addition to composition of the metal oxides contained in the ceramic sintered body of the present disclosure.

The ceramic sintered body of the present disclosure contains 67 mass% or more of Al, and further, may contain 75 mass% or more of Al in terms of Al₂O₃. The ceramic sintered body of the present disclosure contains 89.5 mass% or less of Al in terms of Al₂O₃. The content of Al may be adjusted according to the contents of other components to be described later.

The ceramic sintered body of the present disclosure contains Ti and Fe in a total amount of 10 mass% or more and 30 mass% or less in terms of TiO₂ and Fe₂O₃, respectively, and further, may contain Ti and Fe in a total amount of 20 mass% or more and 25 mass% or less in terms of TiO₂ and Fe₂O₃, respectively.

Blending Ti and Fe in a total amount of 10 mass% or more in terms of TiO₂ and Fe₂O₃, respectively can reduce the resistivity of the ceramic sintered body. Blending Ti and Fe in a total amount of 30 mass% or less in terms of TiO₂ and Fe₂O₃, respectively can maintain good mechanical strength of the ceramic sintered body.

The ceramic sintered body of the present disclosure has TiO₂/(TiO₂ + Fe₂O₃) of 5% or more and 20% or less, and further, may have TiO₂/(TiO₂ + Fe₂O₃) of 15% or more and 20% or less.

When TiO₂/(TiO₂ + Fe₂O₃) is 5% or more, the resistivity of the ceramic sintered body can be reduced. When TiO₂/(TiO₂ + Fe₂O₃) is 20% or less, the ceramic sintered body can exhibit a good black color.

The ceramic sintered body of the present disclosure may contain at least one selected from the group consisting of Si, Ca, and Mg in a total amount of 0.5 mass% or more and 3.0 mass% or less in terms of SiO₂, CaO, and MgO, respectively.

Blending at least one selected from the group consisting of Si, Ca, and Mg in a total amount of 0.5 mass% or more in terms of SiO₂, CaO, and MgO, respectively, can reduce the resistivity of the ceramic sintered body. Blending at least one selected from the group consisting of Si, Ca, and Mg in a total amount of 3.0 mass% or less in terms of SiO₂, CaO, and MgO, respectively, can maintain good low reflectance of the ceramic sintered body.

The ceramic sintered body of the present disclosure has a volume resistivity of 10⁴ Ω·cm or more and 10¹¹ Ω·cm or less, and further, may have a volume resistivity of 10¹⁰ Ω·cm or less. This results in a ceramic sintered body suitable for an application requiring semiconductivity.

In the ceramic sintered body of the present disclosure, a grain boundary phase mainly plays a role of reducing volume intrinsic resistivity. When the ceramic sintered body of the present disclosure has a large average crystal grain size, the volume resistivity tends to be low. This is presumably because a network of the grain boundary phase became thick as the average crystal grain size increased.

The ceramic sintered body of the present disclosure has a three-point bending strength, as specific mechanical strength, of 260 MPa or more, and further, may have a three-point bending strength of 300 MPa or more. This results in a ceramic sintered body suitable for an application requiring high physical strength.

In general, the mechanical strength tends to increase as the average crystal grain size is smaller. In consideration of the balance between the mechanical strength and the volume resistivity, the average crystal grain size may be in a range of from 5 µm or more and 7 µm or less. The average crystal grain size can be controlled by appropriately adjusting the firing temperature and the firing time. The average crystal grain size may be measured by a cord method.

The ceramic sintered body of the present disclosure has a composition in the above-described range, and thus a black ceramic sintered body having semiconductivity and excellent mechanical strength can be realized.

In addition, the ceramic sintered body of the present disclosure has a composition in the above-described range, and thus can exhibit semiconductivity even in a non-reducing atmosphere during firing. This makes it possible to easily manufacture a semiconductive ceramic sintered body, and thus to reduce a manufacturing cost of the ceramic sintered body.

The ceramic sintered body of the present disclosure has a reflectance of 15% or less, and further, may have a reflectance of 10% or less. This results in a ceramic sintered body suitable for an application requiring a low reflectance.

In the ceramic sintered body of the present disclosure, a* and b* may be -2.0 or more and 2.0 or less. This results in a ceramic sintered body suitable for an application requiring a black color in particular.

Each metal element contained in the ceramic sintered body of the present disclosure can be quantified using an inductively coupled plasma (ICP) emission spectrometer. The content of each metal element obtained by the measurement is converted into a value in terms of a corresponding metal oxide, and is defined as a content proportion of each metal element. Specifically, for example, the content of Al is converted in terms of Al₂O₃, the content of Ti is converted in terms of TiO₂, the content of Fe is converted in terms of Fe₂O₃, the content of Si is converted in terms of SiO₂, the content of Ca is converted in terms of CaO, and the content of Mg is converted in terms of MgO. When the ceramic sintered body contains another metal element, its content may be converted in terms of a representative metal oxide of the element.

An example of a method for manufacturing the ceramic sintered body of the present disclosure is described.

Al₂O₃, TiO₂, and Fe₂O₃ in a particle or powder form are mixed, and at least one selected from the group consisting of SiO₂, CaO and MgO is added as a sintering aid. Each raw material powder may have a particle size, for example, of from 0.1 µm to 5 µm.

Water and an optional binder are added to the mixed powder, mixed and stirred to produce a slurry. The slurry is made into granules with a spray dryer, and a molded body having a desired shape is prepared using the granules and fired in an oxidizing atmosphere, whereby the ceramic sintered body of the present disclosure is obtained. A known method such as press molding can be used for preparing the molded body.

A firing temperature during firing may be, for example, 1350°C or higher and 1550°C or lower. A firing time may be, for example, about 2 hours. A firing atmosphere may be the atmosphere.

### EXAMPLE

Ceramic sintered bodies having different compositions were prepared, and volume resistivity, reflectance, a*, b*, and three-point bending strength as mechanical strength were measured.

First, Al₂O₃ powder, TiO₂ powder, Fe₂O₃ powder, SiO₂ powder, CaO powder, and MgO powder were provided.

Then, the sintered ceramics were weighed, and a mass proportion of Al in terms of Al oxide (Al₂O₃), a mass proportion of Fe in terms of Fe oxide (Fe₂O₃), a mass proportion of Ti in terms of Ti oxide (TiO₂), a mass proportion of Si in terms of Si oxide (SiO₂), a mass proportion Ca in terms of Ca oxide (CaO), and a mass proportion of Mg in terms of Mg oxide (MgO) were values in Table 1.

Water and an optional binder were then added to each of the weighed powders, mixed and stirred to produce a slurry. The slurry was made into granules with a spray dryer, and a molded body having a desired shape was obtained by molding the granules.

The molded body was then fired using a firing furnace in the atmosphere, i.e., an oxidizing atmosphere to obtain sintered body samples. The firing temperature was set to a range of from 1350°C to 1550°C, and the firing time was set to 2 hours.

Each sample was then measured using XRD to confirm the presence of aluminum oxide (alumina). For each sample, Al, Si, Ca, Mn, Ti, Fe and Mg were measured using an ICP emission spectrometer to determine a content of each element, and the determined content of the element was converted into a content of each oxide to calculate the content proportion of each element indicated in Table 1. The ICP emission spectroscopic analysis is sometimes simply referred to as ICP.

The volume resistivity of the obtained sintered body was measured by a three-terminal method using a commercially available electrical resistance measuring device, for example, a super insulation resistance meter DSM-8104 available from HIOKI E. E. CORPORATION, and the results are indicated in Table 1.

The reflectance of the obtained sintered body was measured in the visible light region using a color difference meter, for example, CR-13 available from Konica Minolta, Inc., and the results are indicated in Table 1.

In addition, using the obtained sintered body, a* and b* based on the CIE1976 (L*a*b*) color space were measured at wavelengths of from 400 nm to 700 nm using a spectrophotometer, for example, CM-700dl available from Konica Minolta, Inc. in accordance with JIS Z 8722-2000, and the results of measuring a* and b* are indicated in Table 1. The notation (%) indicated in Table 1 is an abbreviation for mass% in all cases except for the reflectance.

Using the obtained sintered body, the three-point bending strength was measured in accordance with JIS R 1601-2008, and the results were indicated in Table 1.

The measured values of the samples indicated in Table 1 are measured values at a sintered surface except for Sample No. 17, and the measured values of Sample No. 17 are measured values at a mirror surface in the sample having the same composition as that of Sample No. 16.

### [Table 1]

**(Table 1)**

| Sample No. | Content | | | | | | | | | Various properties | | | | |
|---|---|---|---|---|---|---|---|---|---|---|---|---|---|---|
| | Al₂O₃ | TiO₂ | Fe₂O₃ | TiO₂+ Fe₂O₃ | TiO₂/ (TiO₂+ Fe₂O₃) | SiO₂ | CaO | MgO | Subtotal | Resistivity | Reflectance | a* | b* | Three-point bending strength |
| | (%) | (%) | (%) | (%) | (%) | (%) | (%) | (%) | (%) | 10¹⁰Ωcm | (%) | | | (MPa) |
| 1 | 90.1 | 1.1 | 7.9 | 9 | 12 | 0.8 | 0.1 | 0 | 0.9 | 13 | 8 | 1.8 | 1.7 | 365 |
| 2 | 89.1 | 1.2 | 8.8 | 10 | 12 | 0.8 | 0.1 | 0 | 0.9 | 8 | 8.3 | 1.4 | 1.3 | 340 |
| 3 | 83.0 | 1.9 | 14.2 | 16 | 12 | 0.8 | 0.1 | 0 | 0.9 | 4 | 8.4 | 0.5 | 0.6 | 308 |
| 4 | 78.7 | 2.4 | 18.0 | 20 | 12 | 0.8 | 0.1 | 0 | 0.9 | 0.87 | 10.4 | 0.3 | -0.4 | 275 |
| 5 | 69.6 | 3.6 | 25.9 | 30 | 12 | 0.8 | 0.1 | 0 | 0.9 | 0.003 | 11.1 | -0.3 | -1.2 | 260 |
| 6 | 68.1 | 3.6 | 27.4 | 31 | 12 | 0.8 | 0.1 | 0 | 0.9 | 0.001 | 14 | -1.9 | -1.8 | 220 |
| 7 | 83.3 | 0.6 | 15.2 | 16 | 4 | 0.8 | 0.1 | 0 | 0.9 | 15 | 8 | 1.9 | 1.8 | 260 |
| 8 | 83.3 | 0.8 | 15 | 16 | 5 | 0.8 | 0.1 | 0 | 0.9 | 9 | 8 | 1.1 | 1.3 | 289 |
| 9 | 83.3 | 1.1 | 14.7 | 16 | 7 | 0.8 | 0.1 | 0 | 0.9 | 5.4 | 8.2 | 0.6 | 0.4 | 305 |
| 10 | 83.3 | 2.2 | 13.6 | 16 | 14 | 0.8 | 0.1 | 0 | 0.9 | 3 | 8.5 | 0.2 | 0.7 | 311 |
| 11 | 83.3 | 3.1 | 12.7 | 16 | 20 | 0.8 | 0.1 | 0 | 0.9 | 1 | 8.7 | 1.6 | 1.5 | 339 |
| 12 | 83.5 | 3.3 | 12.3 | 16 | 21 | 0.8 | 0.1 | 0 | 0.9 | 0.7 | 9 | 2.4 | 1.7 | 346 |
| 13 | 78.1 | 3.3 | 18.2 | 22 | 15 | 0.3 | 0.1 | 0.0 | 0.4 | 14 | 8 | 1.7 | 1.9 | 366 |
| 14 | 78.0 | 3.3 | 18.2 | 22 | 15 | 0.4 | 0.1 | 0.0 | 0.5 | 5.4 | 9 | 1.4 | 1.3 | 348 |
| 15 | 77.6 | 3.3 | 18.2 | 22 | 15 | 0.8 | 0.1 | 0.0 | 0.9 | 1 | 11 | 0.3 | 0.5 | 333 |
| 16 | 75.9 | 3.3 | 18.2 | 22 | 15 | 2.2 | 0.4 | 0.0 | 2.6 | 0.8 | 12 | -0.3 | -0.3 | 315 |
| 17 | 75.9 | 3.3 | 18.2 | 22 | 15 | 2.2 | 0.4 | 0.0 | 2.6 | 0.8 | 3 | 0.2 | 1.7 | 315 |
| 18 | 75.5 | 3.3 | 18.2 | 22 | 15 | 2.2 | 0.4 | 0.4 | 3.0 | 0.5 | 14 | -1.7 | -1.8 | 298 |
| 19 | 75.5 | 3.3 | 18.2 | 22 | 15 | 2.4 | 0.6 | 0.0 | 3.0 | 0.5 | 14 | -1.7 | -1.8 | 271 |
| 20 | 75.4 | 3.3 | 18.2 | 22 | 15 | 2.5 | 0.6 | 0.0 | 3.1 | 0.4 | 18 | -2.3 | -2.5 | 231 |

As indicated for Sample No. 1, when To and Fe were contained in a total amount of less than 10 mass% in terms of TiO₂ and Fe₂O₃, respectively, a ceramic sintered body having a volume resistivity of more than 1.0 × 10¹¹ Ω cm and poor semiconductivity was obtained.

As indicated for Sample No. 6, when Ti and Fe were contained in a total amount of more than 30 mass% in terms of TiO₂ and Fe₂O₃, respectively, a ceramic sintered body having a three-point bending strength of less than 260 MPa and poor mechanical strength was obtained.

As indicated for Sample No. 7, when TiO₂/(TiO₂ + Fe₂O₃) was less than 5%, a ceramic sintered body having a volume resistivity of more than 1.0 × 10¹¹ Ω cm and poor semiconductivity was obtained.

As indicated for Sample No. 12, when TiO₂/(TiO₂ + Fe₂O₃) was more than 20%, a ceramic sintered body having a* of more than 2.0 and a poor black color was obtained.

As indicated for Sample No. 13, when at least one selected from the group consisting of Si, Ca, and Mg is contained in a total amount of less than 0.5 mass% in terms of SiO₂, CaO, and MgO, respectively, a ceramic sintered body having a volume resistivity of more than 1.0 × 10¹¹ Ω cm and poor semiconductivity was obtained.

Sample No. 18 containing MgO had a higher strength than that of Sample No. 19 not containing MgO. When the microstructure was confirmed, the average crystal grain size of Sample No. 18 was 4.6 µm, which was smaller than that of Sample No. 19 having an average crystal grain size of 5.1 µm. The average crystal grain size of each of Samples Nos. 2 to 5, 8 to 11, and 14 to 17 was within a range of from 5 µm to 7 µm.

As indicated for Sample No. 20, when at least one selected from the group consisting of Si, Ca, and Mg was contained in a total amount of more than 3.0 mass% in terms of SiO₂, CaO, and MgO, respectively, a ceramic sintered body having a reflectance of more than 15%, a* and b* of less than -2.0 and a poor black color was obtained.

Further, the three-point bending strength of Sample No. 20 was less than the 260 MPa, and a ceramic sintered body having poor mechanical strength was obtained.

In contrast, as indicated for Samples Nos. 2 to 5, 8 to 11, and 14 to 19, the ceramic sintered bodies containing Al in an amount of 67 mass% or more in terms of Al₂O₃, Ti and Fe in a total amount of 10 mass% or more and 30 mass% or less in terms of TiO₂ and Fe₂O₃, respectively, where TiO₂/(TiO₂ + Fe₂O₃) was 5% or more and 20% or less, and at least one selected from the group consisting of Si, Ca, and Mg in a total amount of 0.5 mass% or more and 3.0 mass% or less in terms of SiO₂, CaO, and MgO, respectively had a volume resistivity of 1.0 × 10⁴ Ω cm or more and 1.0 x 10¹¹ Ω cm or less and a three-point bending strength of 260 MPa or more.

As described above, the ceramic sintered body of the present disclosure has good semiconductivity and physical strength. The ceramic sintered body of the present disclosure also had a reflectance of 15% or less and a* and b* of -2.0 or more and 2.0 or less, and exhibited a black color.

For Sample No. 16, a disc having dimensions of 30 mm in thickness and 800 mm in diameter after firing was prepared, and each of a*, b*, and reflectance was measured at five points at a surface of the disc at equal intervals in the diameter direction. This measurement is performed on a polished surface. A color tone was measured with a spectrophotometer CM-26dg available from Konica Minolta, Inc., at wavelengths of from 360 nm to 740 nm.

As a result of the measurement, a surface roughness Ra after polishing was about from 0.2 to 0.6 µm. A difference between the maximum value and the minimum value of a* was 0.28. A difference between the maximum value and the minimum value of b* was 0.31. A difference between the maximum value and the minimum value of the reflectance was 0.68%. As described above, the ceramic sintered body of the present disclosure has a small color tone difference depending on the location even when used as a large product.

When the content of Al was 89.5 mass% or less in terms of Al₂O₃, a ceramic sintered body having a low volume resistivity was obtained.

While the present disclosure has been described in detail, the present disclosure is not limited to the aforementioned embodiment, and various changes, improvements, and the like can be made without departing from the gist of the present disclosure.

Further effects and variations can be readily derived by those skilled in the art. Thus, a wide variety of aspects of the present invention are not limited to the specific details and representative embodiment represented and described above. Accordingly, various changes can be made without departing from the spirit or scope of the general inventive concepts defined by the appended claims and their equivalents.

## Claims

1. A ceramic sintered body, comprising Al, Ti, Fe, and at least one selected from the group consisting of Si, Ca, and Mg,
wherein the ceramic sintered body contains:
the Al in an amount of 67 mass% or more in terms of Al₂O₃;
the Ti and the Fe in a total amount of 10 mass% or more and 30 mass% or less in terms of TiO₂ and Fe₂O₃, respectively, where TiO₂/(TiO₂ + Fe₂O₃) is 5% or more and 20% or less; and
the at least one selected from the group consisting the Si, the Ca, and the Mg in a total amount of 0.5 mass% or more and 3.0 mass% or less in terms of SiO₂, CaO, and MgO, respectively, and
a volume resistivity is 1.0 **×** 10⁴ Ω cm or more and 1.0 **×** 10¹¹ Ω cm or less.

2. The ceramic sintered body according to claim 1, wherein
the volume resistivity is 1.0 × 10¹⁰ Q cm or less.

3. The ceramic sintered body according to claim 1 or 2, wherein
a reflectance is 15% or less.

4. The ceramic sintered body according to any one of claims 1 to 3, wherein
a* and b* are -2.0 or more and 2.0 or less.

5. The ceramic sintered body according to any one of claims 1 to 4, wherein
a three-point bending strength is 260 MPa or more.
